# EUROPEAN PATENT APPLICATION

(11) **EP 1 022 257 A1**
(43) Date of publication of application: **26.07.2000**
(21) Application number: 97922806.1
(22) Date of filing: 19.05.1997
(51) Int. Cl.: C02F 1/68, A01K 63/04, C02F 1/00, B01D 24/12

(54) **A WATER PURIFICATION APPARATUS HAVING MANY FUNCTIONS**

(71) Applicant: Chen, Chengrui, Zaoqiao Village, Miaoli County, Taiwan (CN)
(72) Inventor: CHEN, Chengrui, Zaoqiao Village Miaoli County Taiwan (CN); ZENG, Wangxi, Shengang Village Zhanghua County Taiwan (CN)
(74) Representative: Viering, Jentschura & Partner
(86) International application number: CN9700049
(87) International publication number: WO9852878

(57) **Abstract**

A multiple usage water cleaning device comprises a hollow tube body which is uprightly located within a water tank, and the upper opening of which is connected with a proper cambered tube; a bubble stone is installed within said tube, which is connected with an outside air pump through an air inlet tube; further, a container is installed outside the water tank, and a water outlet of the cambered tube of the tube body being penetrating through the top of the container the inside of which is installed with proper filtering material and the bottom of which is installed with a drain outlet. Integrally, the present invention has low cost and preferred oxygen containing ratio so to derive the preferred filtering effect.

## Description

### Background of the invention

### 1. Field of the invention

The present invention relates to a multiple usage cleaning device, especially to a low cost, multiple usage cleaning device having preferred oxygen-containing ratio and preferring filtering effect.

### 2. Description of the prior art

For water used in agriculture, a further filtering device is installed for recycling water. Furthermore, water used in agriculture and fisheries will become muddy by the pollution of the excreta of fish and shrimps or other waste. It is necessary to clean thus by a filtering device and by a physical method for sustaining clean water so that the fish and shrimps may exist happily.

Furthermore, in the water used in agriculture und fisheries, the oxygen containing volume thereof will be sustained within a predetermined range, for example, the oxygen-containing ratio of the water for cultivating shrimps is greater than 3.7 PPM. But since river water has recently been dramatically polluted, even the oxygen-containing ratio has reduced to zero. Therefore it has become a problem to obtain water used in agriculture and fisheries. Thus it is urgently necessary to design an effective filtering device.

However, it is necessary to install the prior filtering device with a water pumping motor for pumping the water to the filtering device so that the waste in the water may be filtered by the filtering material in the water. The cleaning water is then led to the water tank, but the water pumping motor is expensive and requires much power. Further, in the prior filtering device, the water is filtered by the filtering material in the water. The cleaning effect is bad thus the required water quality may not be attained.

### Summary of the invention

Accordingly, the filtering device for agricultural water has some drawbacks in practice and must be further improved.

Therefore, the inventor of the present invention has studied for a long time to design a new multiple usage cleaning device by which the drawback in the prior art may be overcome.

The main object of the present invention is to provide a multiple usage cleaning device so that the water resources may be used repeatedly and it fulfills the requirement of environment protection. In the present invention, a bubble stone is installed within a tube, and the bubble stone is connected with an outside air pump through an air inlet tube. Another container is installed, the inside of which is installed with-proper filtering material. The air is transferred into the bubble stone, then the bubble stone will generate a plurality of small bubbles so that the air will flow into the water and the oxygen will dissolve in the water, thus the oxygen dissolving ratio of the water will increase. As the air is transferred to the bubble stone, the water within the tube is pushed upwards, by the upward force of the air, and is then led to a container through a cambered tube so that the waste water will be processed by the filtering material within the container, thus producing clean water. Therefore, the inconvenience for updating water in agriculture and fishery will be prevented. Since in the present invention the air is used to drive the water to flow, the water pump may be neglected, and a cheap and power saving air pump is used. Further, if the fishery water is used to be filtered, then the air inlet pump may be connected with and directly used in the air pump employed in fishery, thus the cost will be further reduced.

Furhtermore, since small bubbles may be generated from the bubble stone installed in the present invention and existing within the tube having a predetermined volume so that the contact area of the water and bubbles of the tube is increased, the oxygen-containing volume is also increased, and by the breeding of microorganisms within the filtering material to decompose ammonia and other harmful material, a preferred biological filtering effect is created. It is appreciated that the present invention has wider application fields, including water used in homes, aquatic animal tanks, agriculture, fisheries and industry. Furthermore, in the present invention may be further applied to industrial waste water, so it is a multiple usage water cleaning device.

Moreoover, in practice, the present invention may be located within a water tank (pool) to clean water, thus the application of the present invention is further widened. However, in the prior art, the cleaning device has only one function. By using the present invention, the trouble of updating water will be prevented and cost is also saved.

The present invention will be better understood and its numerous objects and advantages will become apparent to those skilled in the art by referencing to the following drawings in which:

### Brief description of the drawings

Fig. 1 is the plan view of the present invention.
Fig. 2 is a status schematic view of the usage of the present invention.
Fig. 3 is another plan view of another embodiment in the present invention.
Fig. 4 is a status schematic view of the usage in another embodiment of the present invention.
Fig. 5 is a status schematic view of the usage in furhter embodiment of the present invention.
Fig. 6 is a status schematic view of the usage of the present invention applied in an aquatic animal tank.

| **Numeral Symbols** | |
|---|---|
| 10 tube body | 11 water tank |
| 12 cambered tube | 13 bubble stone |
| 14 air inlet tube | 15 container |
| 16 filtering material | 17 plate body |
| 18 through hole | 19 drain tube |
| 20 drain tube | 21 cambered tube |
| 22 container | 23 drain tube |
| 24 air pump | 25 aquatic animal tank |
| 26 water inlet area | 27 water outlet |

### Detailed description of the preferred embodiment

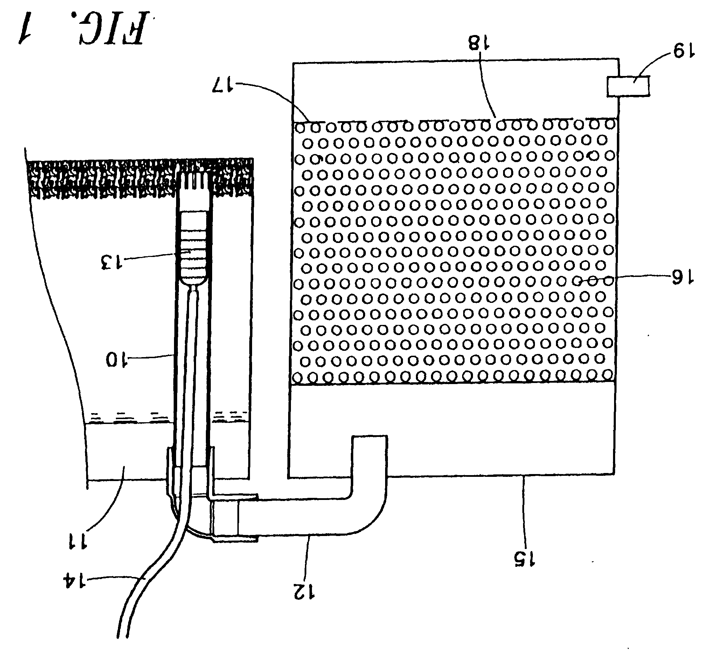

Referring to Fig. 1, the plan view of the present invention is shown. The present invention is provided with a multi-functional cleaning device which is located outside, wherein a hollow tube 10 in included. Said tube is properly and uprightly installed within the water tank 11 (water pool). The upper opening of the tube 10 may be connected with a proper cambered tube 12 so that the water may be guided to the outside of the water tank 11. A bubble stone 13 is located within the tube 10, which is connected with an outside air pump (not shown) with an air inlet tube so that the air may be transferred to the bubble stone 13. In addition, a tightly sealed container 15 is located on the outside of the water tank 11, and the water outlet opening of the upper chambered tube 12 of the tube 10 penetrate through the top portion of the container 15. A proper filtering material 16 is installed within the tube 15, which may by a plastic fiber, rocks, silicon sands, etc. A plate body 17 is installed on the bottom portion of the filter material 16 for supporting said filtering material 16. A proper through hole 18 is installed on the plate body 17 for passing through by water. A drain opening 19 is installed on the bottom of the container 15 for draining water. The components described above construct a multi-functional cleaning device of the present invention.

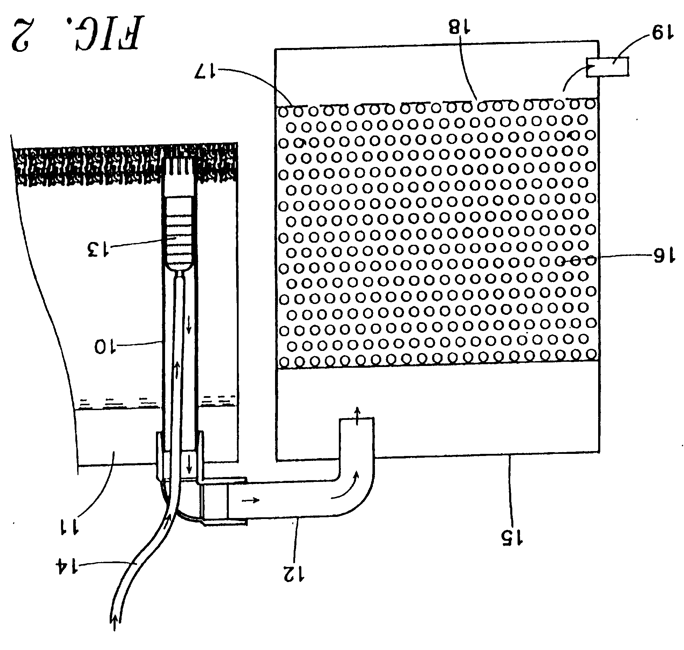

Referring to Fig. 2, the schematic view of the present invention is shown. In using the cleaning device of the present invention, the air is transferred to the bubble stone 13 by the air inlet tube 14. Now a plurality of small bubbles will be outputted from the bubble stone 13, thus the air will flow into the water and the oxygen will dissolve in the water so that the oxygen dissolving ratio increases. As the air flows out from the bubble stone 13, the water within the tube 10 will be pushed upwards, by the upward ejecting force of the air, to container 15 through the cambered tube 12. Thus the water will be processed by physical or other methods through the filtering material 16. The water having been processed by the filtering material 16 will be drained out through the through hole 18 of the plate body 17 and the drain opening 19 so as to generate clean water and then the water is led back to the water tank 11. By the device of the present invention, the water will be as clean as possible so as to prevent inconvenience in the fishery and agriculture. Since in the present invention the water is pushed upwards by air, thus the motor for pumping water is unnecessary, it is only necessary to buy a cheap and power-saving air pump. Further, if fishery water is filtered, then the air inlet pump may be connected with and use directly the air pump employed in the fishery, thus the cost will be further reduced. Furthermore, since small bubbles may be generated from the bubble stone 13 installed in the present invention and existing within the tube 10 having predetermined volume so that the contact area of the water and bubbles of the tube 10 is increased, the oxygen-containing volume is also increased, and by the breeding of microorganisms within the filtering material 16 to decompose ammonia and other harmful materials, a preferred biological filtering effect is created. Moreover, other than in the water processing of fisheries, the present invention may similarly be used in the water processing agriculture and other sectors.

Furthermore, in the general water tower, since the water cleaning device or pipes are old, it is often that the water within the tower has some odd smell or becomes muddy. If the present invention is employed in the water tower, such a drawback may be effectively overcome, and in the general home waste water may be filtered and restored by the present invention.

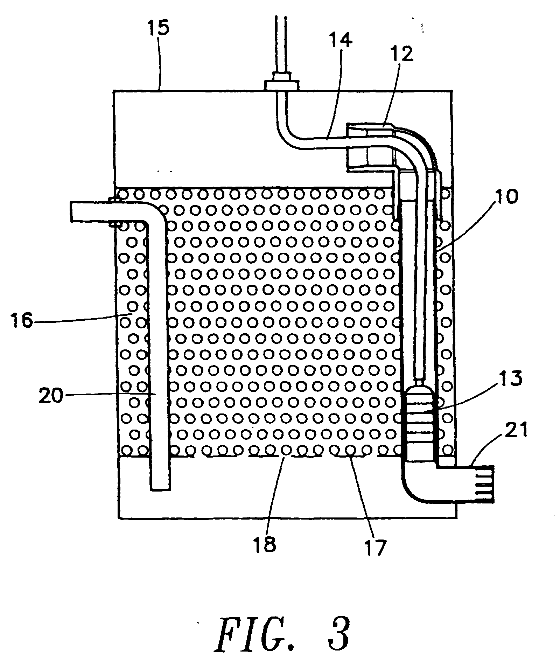

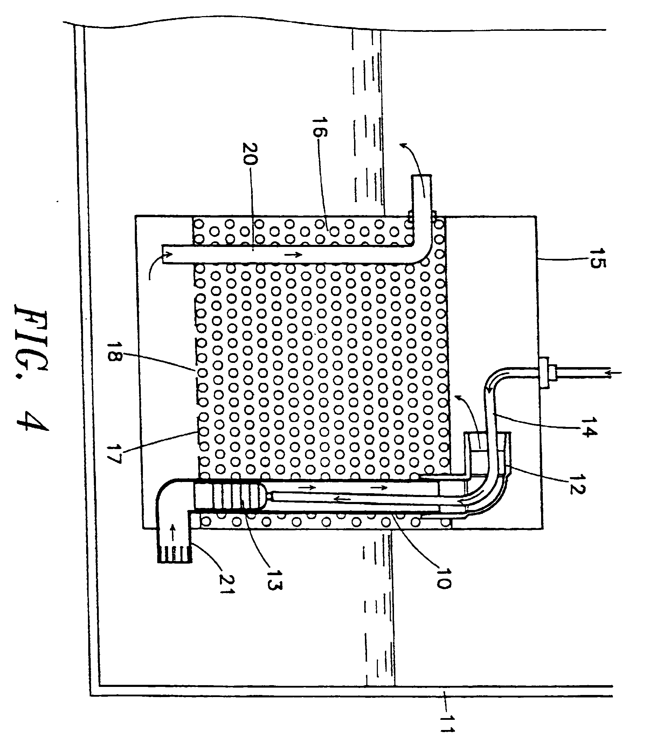

Referring to Figs. 3 and 4, the plane view and schematic view of the present invention are shown, respectively. This embodiment is a built-in water cleaning device including a hollow tube 10 which is uprightly located within a tightly sealing container 15. Two proper cambered tubes 12 and 21 are connected on the upper and lower openings of the tube 10, and a bubble stone 13 may be positioned within the tube 10, which is connected with an outside air pump (not shown) through an air inlet pump 14. The water oulet opening on the upper cambered tube 12 of the tube 10 is located within the upper portion of the container 15, and proper filtering material 16 is installed within the container 15. A plate body 17 is installed on the lower portion of the filtering material 16 for supporting said material, and a proper through hole 18 is installed on the plate body 17. A drain pipe 20 is installed within the container 15 for draining water. The present invention may be located on the water tank 11 so that while in use, the air is transferred into the bubble stone 13 through an air inlet pipe 14, thus the air will be transferred into the water. As the air is generated from the bubble stone 13, the water within the tube 19 will be pushed upwards by the upward force of the air and is then guided to the container 15 through a cambered tube 12. Therefore, the water may be processed by the filtering material 16 of the container 15. The water processed by the filtering material 16 will be drained out through the through hole 18 of the plate body 17 and the drain pipe 20 so as to generate clean water which will then be transferred back to the water tank 11. By the design of the embodiment in the present invention, the effect is the above embodiment may be similary attained.

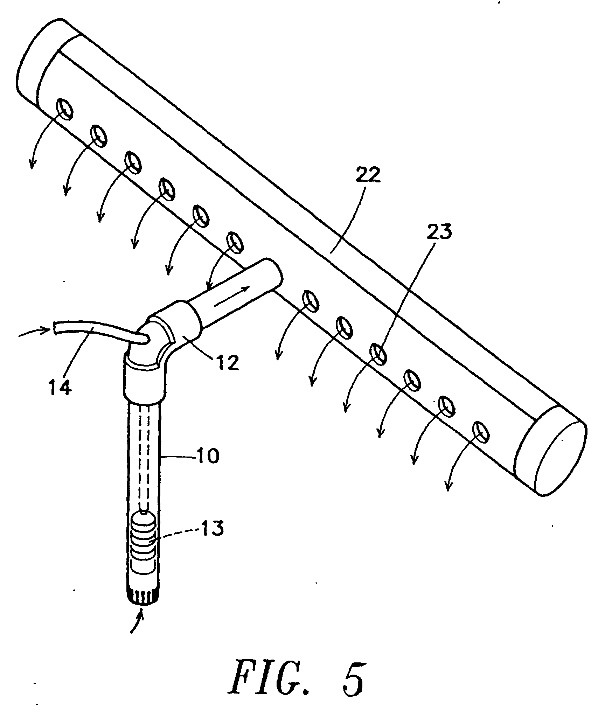

Referring to Fig. 5, a schematic view of the usage of a further embodiment of the present invention is shown. In the present embodiment, an outdoor water cleaning device used in a pool includes a tube 10 which may be uprightly located within a pool, and a proper cambered tube 12 may be connected on the upper opening of the tube 10. A proper cambered tube 12 is connected on the upper and lower openings of tube 10, and a bubble stone 13 may be positioned within the tube 10, which is connected with an outside air pump (not shown) through an air inlet pump 14. The water outlet opening on the upper cambered tube 12 of the tube 10 is located within an upper portion of the container 22, and proper filtering material is installed within the container 22. A plurality of drain openings 23 are penetrated on the container 22. The tube 10 of the present invention may be installed in a pool so that while in use, the air is transferred into the bubble stone 13 through an air inlet pipe 14, thus the air will be transferred into the water. As the air is generated from the bubble stone 13, the water within the tube 10 will be pushed upwards by the upward force of the air and is then guided to the container 22 through a cambered tube 12. Therefore, the water may be processed by the filtering material of the container 22. The water processed by the filtering material 16 will be drained out through drain openings 23 so to generate clean water which will then be transferred back to the pool.

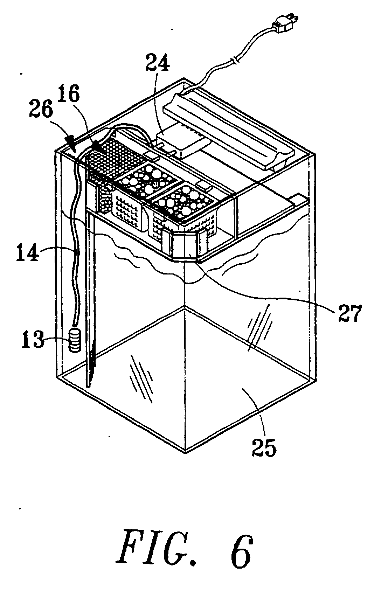

Referring to Fig. 6, an aquatic animal tank which is usually used at home as a decoration. However, whatever the size of the said tank, the cleaning of the tank is a troublesome problem. By the structure of the present invention, the excretion and food for feeding fish are filtered so that the water may be cleaned, thus it is needless to update the water and a beautiful water will be viewed by the viewer. It is formed by aquatic animal tank 25, bubble stone 13, air inlet pipe 14, water inlet area 25, water outlet area 27 and air pump 24. Similary, air is output from air pump 24. By the transferring of the air inlet pipe 14 so that air may be generated from the bubble stone 13. Then the generated bubbles will drive the water into the filtering material 16 through the water inlet area 26, finally the clean water will be transferred back from the water inlet area 27.

From the aforementioned four applications, it is appreciated that the present invention has widned the application fields including water used in the home, aquatic animal tanks, agriculture, fisheries and industry. Further, since in the water cleaning device of the present invention it is unnecessary to consider the size of the water tank (pool) and may be located outside or inside thereof, the present invention has relatively high practical application. Moreover, in the present invention, a cheap air pump is used to replace the water pump and by using the present invention, the waste and trouble from replacing water is prevented (especially in agriculture and fisheries), thus the present invention has economic and practical effects. Furthermore, in the present invention may be further applied to industrial waste water, so it is a multiple usage water cleaning device.

Although a certain preferred embodiment of the present invention has been shown and described in detail, it should be understood that various changes and modifications may be made therein without departing from the scope of the appended claims, such as the knife or mesh be substituted by multiple knifes or meshes, or knifes or meshes with other moving paths.

## Claims

1. A multiple usage water cleaning device comprising a hollow tube body which is uprightly located within a water tank, and the upper opening of which is connected with a proper cambered tube; a bubble stone being installed within said tube, which is connected with an outside air pump through an air inlet tube; further, a container being installed outside the water tank, and a water outlet of the cambered tube of the tube body being penetrating through the top of the container the inside of which is installed with proper filtering material and the bottom of which is installed with a drain outlet.

2. The multiple usage water cleaning device as claimed in claim 1, wherein a plate body is installed on the bottom of said filtering material for supporting the filtering material and a proper through hole is installed on the plate body.

3. The multiple uasge water cleaning device as claimed in claim 1, wherein the tube may ha a cylindrical shape or other proper shapes.

4. The multiple water cleaning device as claimed in claim 1, wherein the container for containing the filtering material for cleaning may have any proper shape.

5. A multiple usage water cleaning device comprising a hollow tube body which is uprightly located within a container, the upper and lower openings of which are connected with a proper cambered tube; a bubble stone being installed within said tube, which is connected with an outside air pump through an air inlet tube; the water outlet of the upper cambered tube of the tube body being located on the lower portion within the container and the water inlet on the lower cambered tube of the tube body penetrating to the outside of the container which is installed with proper filtering material and is installed with a drain outlet.

6. The multiple usage water cleaning device as claimed in claim 5, wherein a plate body is installed on the bottom of said filtering material for supporting the filtering material and a proper through hole is installed on the plate body.

7. The multiple usage water cleaning device as claimed in claim 5, wherein the tube may has a cylindrical shape or other proper shapes.

8. The multiple usage water cleaning device as claimed in claim 5, wherein the container for the containing the filtering material for cleaning may have any proper shape.

9. The multiple usage water cleaning device as claimed in claim 1, wherein a hollow tube body which is uprightly located within a pool, the upper opening of which is connected with a proper cambered tube; a bubble stone being installed within said tube, which is connected with an outside air pump through an air inlet tube; the water outlet of the cambered tube of the tube body is connected with a container the inside of which is installed with proper filtering material and on which a plurality of drain outlets are penetrated.

10. The multiple usage water cleaning device as claimed in claim 9, wherein the tube may have a cylindrical shape or other proper shapes.

11. The multiple usage water cleaning device as claimed in claim 9, wherein the container for containing filtering material for cleaning may have any proper shape.

12. The multiple usage water cleaning device as claimed in claim 1, wherein the cleaning device may be located outside.

13. The multiple usage water cleaning device as claimed in claim 5, wherein the cleaning device may be located inside.

14. The multiple usage water cleaning device as claimed in claim 9, wherein the cleaning device may be located inside.

15. The multiple usage water cleaning device as claimed in claim 9, wherein the cleaning device may be located outside.
